# EUROPEAN PATENT APPLICATION

(11) **EP 1 623 660 A2**
(43) Date of publication of application: **08.02.2006**
(21) Application number: 05254909.4
(22) Date of filing: 05.08.2005
(51) Int. Cl.: A47J 43/07

(54) **Measuring and dispensing apparatus with mixing container**

(30) Priority: 06.08.2004 US 599240 P
(71) Applicant: Steiner, Mark, Greenwich, CT 06830 (US)
(72) Inventor: Steiner, Mark, Greenwich, CT 06830 (US)
(74) Representative: Howe, Steven

(57) **Abstract**

A measuring and dispensing assembly (100) adapted to be coupled to a container (10) and to facilitate measuring and dispensing a plurality of ingredients into a container. A food preparation system for measuring and dispensing ingredients into a mixing container which includes a measuring and dispensing assembly adapted to be coupled to the mixing container and to measure and release a plurality of ingredients. The food preparation system may further include a mixing container (10) to receive the ingredients released by the measuring platform. An embodiment may further include a splashguard cover assembly (200) adapted to alternately releasably engage the mixing container (10), the splashguard cover assembly having an aperture (220) adapted to allow passage of a mixing device (300) therethrough, to enable mixing contents of the mixing container while minimizing waste of ingredients from spillage.

## Description

### CROSS-REFERENCE TO RELATED APPLICATIONS

The present application claims priority to U.S. Provisional Patent Application No. 60/599,240, filed August 6, 2004, the teachings of which are incorporated herein by reference.

### FIELD OF THE INVENTION

The invention relates to a system and apparatus for mixing and preparing food items, and more particularly to a measuring and dispensing system with measuring containers for dispensing ingredients into a mixing container. The invention also relates to a mixing container system having a flexible mixer/splashguard assembly to facilitate mixing of ingredients while minimizing waste and mess.

### BACKGROUND

Machines and systems have been developed to facilitate the preparation of food items. Measuring containers and systems exist which may include cup-shaped vessels, such as measuring cups, as well as spoon-shaped instruments, both having open tops and integrally closed bottoms. In order to measure different amounts of various materials such as food ingredients, the measuring containers may contain graduated markings arranged on the containers, or may comprise a number of containers of various sizes, or may incorporate combinations of both these aspects. The measuring containers may further have graduated markings or may be of various sizes to measure specified amounts according to either the metric system or English system of measuring units, or any other suitable measurement system.

With conventional measuring containers, as described above, food ingredients are typically placed or scooped into the measuring container and then emptied into a mixing container or bowl. The closed bottom configuration of such measuring containers often results in appreciable amounts of the measured food ingredients being left in the measuring container, resulting in waste and/or measuring inaccuracies.

Prior attempts to overcome these problems have included portable devices providing a plurality of measuring containers having open tops and bottoms, and being closable at the bottom by a movable bottom portion. In this manner, a measured food ingredient may be released from the bottom(s) of the containers. The volumes of the containers may be specified or selected to provide a convenient set of measuring receptacles.

Other attempts have included complex machines for holding and dispensing ingredients in specified, programmable timing sequences, for example to carry out the actions normally taken by a food preparer following a recipe.

What is needed, however, is an apparatus that is adapted to be operably coupled to a container to provide a relatively stable platform for measuring and dispensing a plurality of ingredients into the container.

What is further needed is a lid or cover apparatus that is adapted to be operably coupled to a container and that allows for operating a mixing device within the container, acting as a splashguard to prevent spillage of items to be mixed, while allowing a user to flexibly position the mixing device within the container to allow more thorough mixing of the ingredients.

### SUMMARY

In certain embodiments of the invention, a measuring and dispensing assembly is adapted to be operably coupled to a container such as a mixing bowl. The measuring and dispensing assembly may comprise a measuring platform having multiple ingredient chutes for measuring ingredients. The ingredient chutes may be formed integrally with the measuring platform, or may comprise a plurality of chutes adapted to be removable from the measuring platform, for example to facilitate clean-up. Some of the ingredient chutes may further have one or more openings formed therein to allow passage of ingredients into a container disposed nearby. In some embodiments, the opening may be formed near a bottom portion of the ingredient chute. In an embodiment of the invention, the measuring and dispensing assembly may include a dispensing member operably coupled to the measuring platform and adapted to movably cover and uncover the one or more openings in the ingredient chutes. Actuating means for moving the dispensing member are operably coupled to the dispensing member for covering and uncovering the openings in the ingredient chutes to thereby release ingredients from the ingredient chutes into the container.

In certain embodiments of the invention, a measuring and dispensing assembly is adapted to be operably coupled to a container, wherein the measuring and dispensing assembly comprises one or more ingredient chutes adapted to hold a measured quantity of an ingredient, and the measuring and dispensing assembly is further adapted to pivot about an axis oriented substantially transverse to an opening in the container. Pivoting the measuring and dispensing assembly about an axis oriented substantially transverse to an opening in the container thereby causes ingredients to be released from the ingredient chutes and dispensed into the container via the opening in the container.

In another embodiment of the invention, a cover assembly may be adapted to be operably coupled to a container to serve as a splashguard. The cover assembly may include an aperture formed in the cover assembly to allow passage of at least a portion of a mixing device to thereby facilitate mixing of ingredients within the container. In one particular embodiment, the mixing device may be a portable mixer adapted to be positioned to mix ingredients almost anywhere within the container. A further embodiment may provide a flexible seal at the interface between the aperture formed in the cover assembly and the mixing device.

In yet another embodiment of the invention, a system for preparing food items comprises a container, a measuring and dispensing assembly adapted to be operably coupled to the container, and a cover assembly adapted to be operably coupled to either the container or to a mixing device to serve as a splashguard. The measuring and dispensing assembly may, for example, releasably attach to the container to place appropriate quantities of various food ingredients into the container. The cover assembly may then releasably attach to the container to facilitate storage of the food ingredients, or may optionally operate to facilitate mixing of ingredients in the container through an aperture formed in the cover assembly.

### DESCRIPTION OF THE DRAWINGS

FIG. 1 is a perspective view of a measuring and dispensing assembly operably coupled to a container, the measuring and dispensing assembly having a measuring platform with multiple ingredient chutes for measuring and dispensing ingredients in accordance with an embodiment of the invention.
FIG. 2 is a perspective view of the measuring and dispensing assembly and container of FIG. 1.
FIG. 3 is an exploded perspective view of a measuring and dispensing assembly and container in accordance with an embodiment of the invention.
FIG. 4 is a perspective view of a cover assembly adapted for placement over a container, to serve as a splashguard for use with a mixing device, in accordance with an embodiment of the invention.
FIG. 5 is an exploded perspective view of the cover assembly and mixing device being used with the container of FIG. 4 in accordance with an embodiment of the invention.
FIG. 6 is a perspective view of the cover assembly and mixing device being used with the container of FIG. 4 in accordance with an embodiment of the invention.
FIG. 7 is an exploded side view of a measuring and dispensing assembly according to an embodiment of the invention.
FIG. 8 is an exploded top perspective view of a measuring and dispensing assembly according to an embodiment of the invention.
FIG. 9 (a) is a top perspective view of a measuring platform according to an embodiment of the invention.
FIG. 9 (b) is a top perspective view of a measuring and dispensing assembly operably coupled to a container in accordance with an embodiment of the invention.

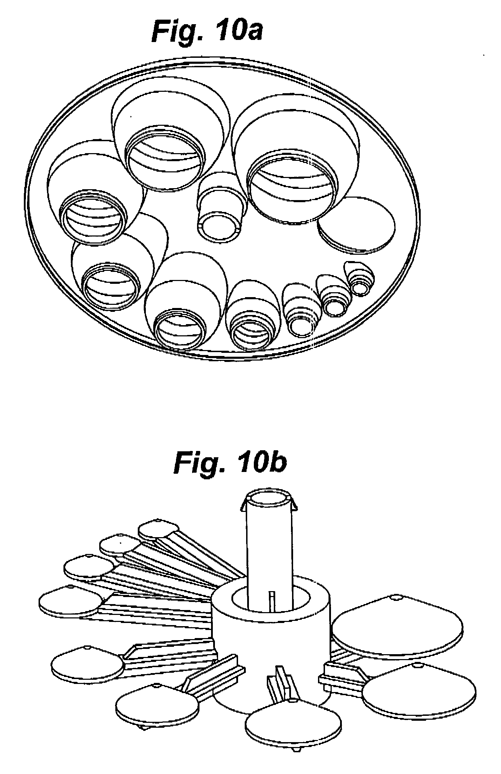

FIG. 10 (a) is a bottom perspective view of a measuring platform according to an embodiment of the invention.
FIG. 10 (b) is a top perspective view of a dispensing member according to an embodiment of the invention.
FIG. 11 is a top perspective view of an egg separator for use with an embodiment of the invention.
FIG. 12 is a perspective view of an actuator knob according to an embodiment of the invention.
FIG. 13 is a perspective view of a biasing spring according to an embodiment of the invention.
FIG. 14 is a top perspective view of a cover assembly with an optional cover closure according to an embodiment of the invention.
FIG. 15 is a top perspective view of a cover assembly according to an embodiment of the invention with an aperture formed for passage of a mixing device according to an embodiment of the invention.
FIG. 16 is a bottom perspective view of a container according to an embodiment of the invention.
FIG. 17 is a top perspective view of a measuring and dispensing assembly operably coupled to a container in accordance with an embodiment of the invention.
FIG. 18 is a top perspective view of a measuring and dispensing assembly operably coupled to a container and partially actuated in accordance with an embodiment of the invention.
FIG. 19 is a top perspective view of a measuring and dispensing assembly operably coupled to a container in accordance with an embodiment of the invention.

### DETAILED DESCRIPTION

The following detailed description should be read with reference to the drawings, in which like elements in different drawings are numbered identically. The drawings depict selected embodiments and are not intended to limit the scope of the invention. It will be understood that embodiments shown in the drawings and described below are merely for illustrative purposes, and are not intended to limit the scope of the invention as defined in the claims.

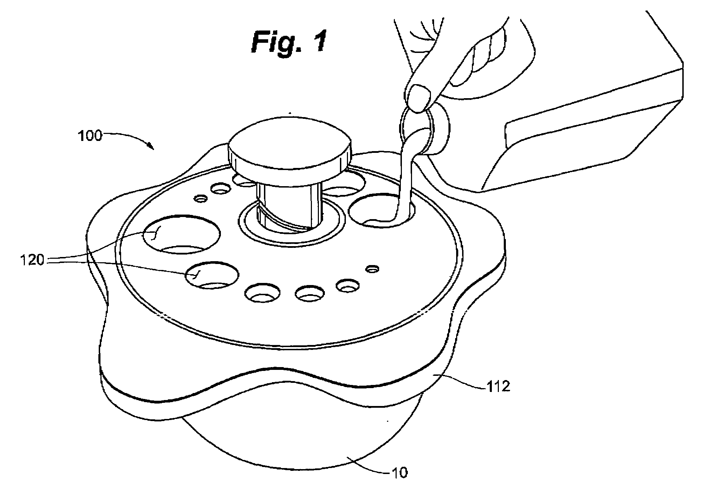

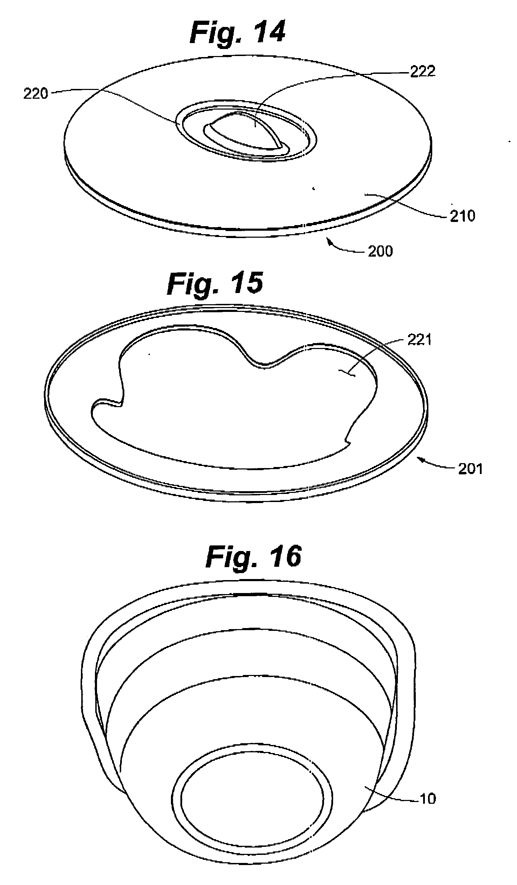

FIG. 1 is a perspective view of a measuring and dispensing assembly 100 operably coupled to a container 10, the measuring and dispensing assembly 100 having a measuring platform 110 with multiple ingredient chutes 120 for measuring and dispensing ingredients in accordance with an embodiment of the invention. In the example illustrated in FIG. 1, the container 10 is a mixing bowl with a handgrip portion 112, as shown. The hand grips may, for example, be used to stabilize or balance the container during placement of ingredients into the ingredient chutes 120, and/or during dispensing of the ingredients into the container 10. The container 10 may have an edge detail that accepts a plurality of devices, such as lids and covers, in addition to the measuring and dispensing assembly 100 shown. FIG. 16 is a bottom perspective view of a container 10 in accordance with an embodiment of the invention. The bottom of the container 10 may be provided with a rubber platform or ring to stabilize the container 10 on a surface on which it is placed.

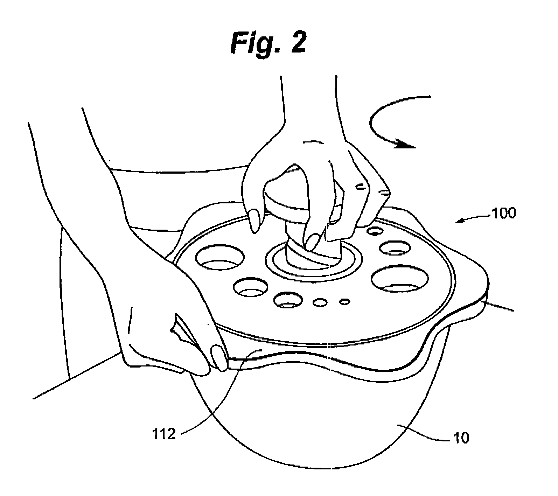

FIG. 2 shows a user operating the measuring and dispensing assembly 100 of FIG. 1 to release ingredients into the container 10. As shown in FIG. 2, the user may stabilize or balance the container 10 by grasping its handgrip portion 112 with one hand, while operating the measuring and dispensing assembly 100 with the other hand. The operation of the measuring and dispensing assembly 100 will be described hereinafter.

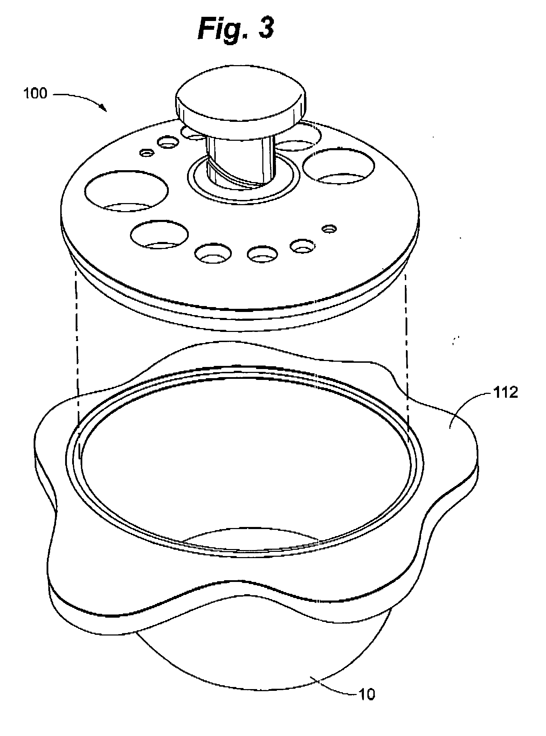

FIG. 3 is an exploded perspective view of the measuring and dispensing assembly 100 and container 10 with handgrip portion 112 of FIG. 1, in accordance with an embodiment of the invention. In one embodiment, the measuring and dispensing assembly 100 may be adapted for releasable flexible engagement with an edge of the container 10, as indicated by FIG. 3. An example of such a releasable flexible engagement is that provided by Tupperware® brand and similar types of releasably closable containers and covers.

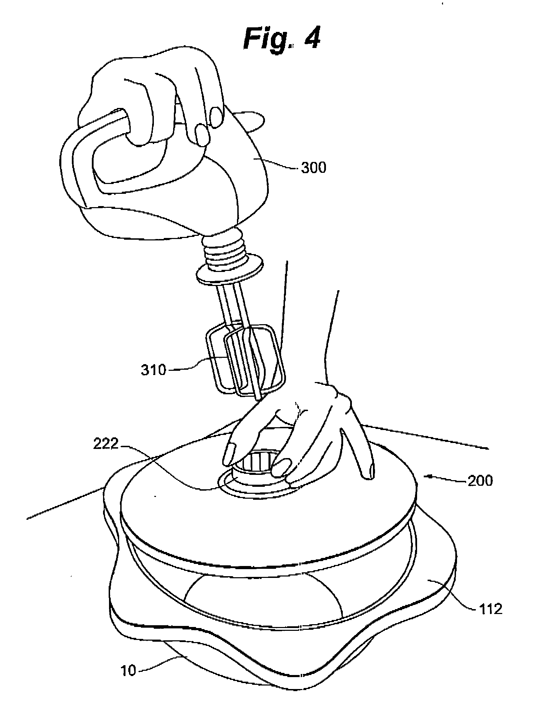

FIG. 4 is a perspective view of a cover assembly adapted for placement over the container, for example, in place of the measuring and dispensing assembly 100. In one possible embodiment, the cover assembly may seal the contents of the container, for example, to store the ingredients for later use. FIG. 14 shows details of an embodiment of the invention adapted to seal the contents of a container. FIG. 14 shows cover assembly 200 comprising a body 210 having an aperture 220 disposed near a center portion thereof. Cover closure 222 is shown in removable sealing engagement with body 210 to cover aperture 220. Cover closure 222 may further comprise a handle to facilitate placement and removal on body 210. In another embodiment, the cover assembly 200 may be adapted to serve as a splashguard, for example to use with a mixing device 300, in accordance with an embodiment of the invention. The cover assembly 200 may also be adapted for releasable flexible engagement with an edge of the container 10. In an embodiment in which the cover assembly 200 is adapted to serve as a splashguard for use with a mixing device 300, a removable cover closure 222 may be installed to seal the contents of the container (when used to store ingredients, for example), and may be removed to allow passage of a mixing device 300 through an aperture 220 in the cover assembly 200 (when used as a splashguard, for example). In one embodiment, aperture 220 may be sized to allow passage of mixing blades 310 of mixing device 300 therethrough. Mixing device 300 may be a portable, hand-held mixer, as shown in FIGS. 4-6, or alternately may be of the larger, stand-alone type of mixers (not shown).

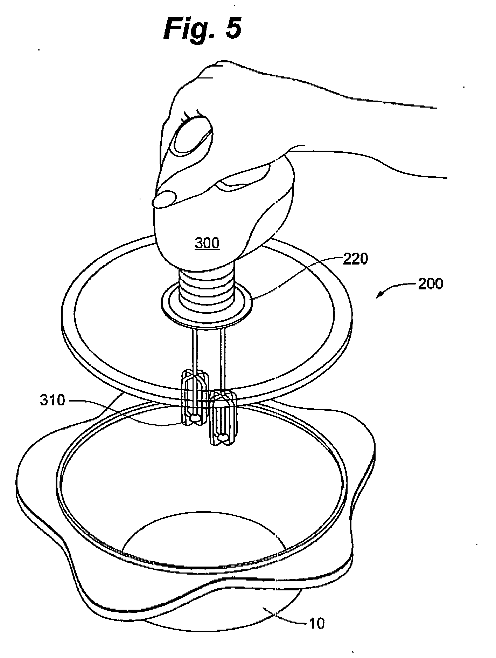

FIG. 5 shows a cover assembly 200 adapted to allow passage of mixing blades 310 of a mixing device 300 through an aperture 220 formed in the cover assembly 200. In the embodiment shown in FIG. 5, the cover assembly 200 is further adapted to couple or engage with the mixing device 300 and mixing blades 310 such that the cover assembly 200 may serve as a splashguard to prevent spillage of ingredients being mixed in the container 10. An alternate embodiment of a cover assembly 201 according to the invention is shown in FIG. 15. Cover assembly 201 shows an aperture 221 formed in the body 211 of cover assembly 201. In this embodiment, aperture 221 is relatively large compared to body 211 and may optionally include a contoured shape as shown in FIG. 15. This embodiment may, for example, be useful when splashing of ingredients is not a great concern, but thorough mixing of ingredients is desired. The relatively large aperture 221 allows for a wider range of movement of any mixing device 300 placed therethrough, thereby enabling mixing of ingredients located in areas of the container that would be more difficult to reach if limited to the aperture 220 shown in FIGS. 5 and 14.

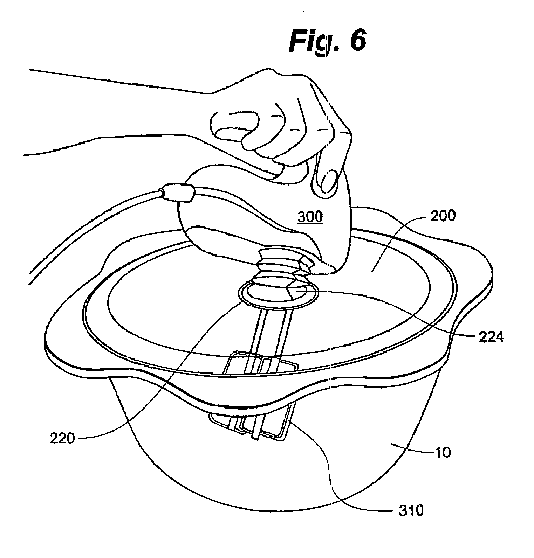

In the embodiment shown in FIG. 6, the cover assembly 200 of FIG. 5 may be further adapted (or may be alternately adapted) for releasable flexible engagement with an edge of the container 10. Such an embodiment may, for example, allow the cover assembly 200 to serve as an effective splashguard, while allowing a mixing device 300 and associated mixing blades 310 to be positioned to mix ingredients almost anywhere within the container 10, as illustrated in FIG. 6. In another embodiment, the cover assembly may further comprise a seal closure member 224 adapted for flexibly coupling the mixing device 300 to the cover assembly 200, as also shown in FIG. 6.

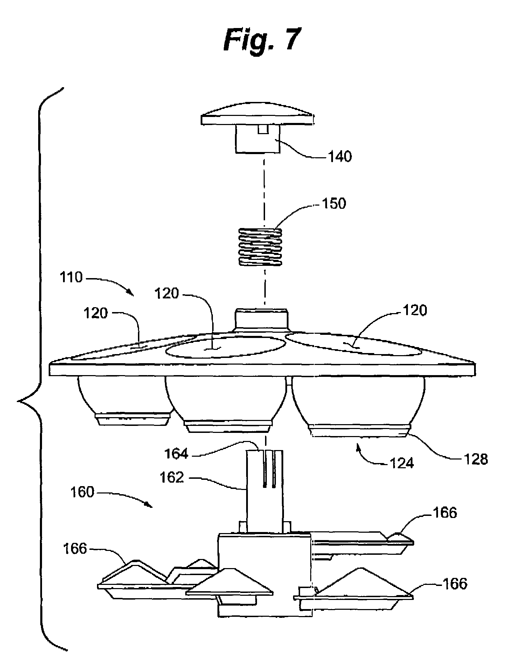

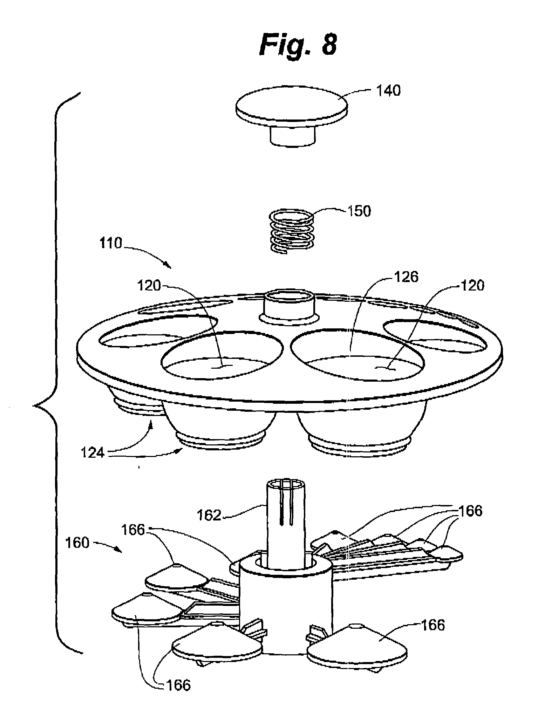

FIG. 7 is an exploded side view of a measuring and dispensing assembly 100 according to an embodiment of the invention. FIG. 8 shows the measuring and dispensing assembly 100 in an exploded top perspective view, showing additional details according to one embodiment of the invention. A measuring and dispensing assembly 100 may include a measuring platform 110 having a plurality of ingredient chutes 120 disposed therein. Measuring platform 110 may be adapted to be supported proximate an opening in a container, such as container 10 shown in FIGS. 1-6. In one embodiment, the measuring platform 110 may be supported on top of a container 10 such that items (such as food ingredients) placed into the ingredient chutes 120 would tend to fall toward the container 10 due to the force of gravity. In a preferred embodiment of the invention, the measuring platform 110 may be adapted to be coupled to the container for stability. For example, the measuring platform 110 may be adapted to flexibly engage the top opening of container 10 to provide a releasable connection between the measuring platform 110 and the container 10.

The measuring platform 110 may have a plurality of ingredient chutes 120 disposed therein as shown in FIGS. 7 and 8. In one embodiment, the measuring platform 110 may be formed of injection molded plastic having a plurality of ingredient chutes 120 formed therein, each ingredient chute 120 capable of holding a different amount of material, either dry or wet (one cup; ½ cup; ¼ cup...etc.) for measuring ingredients. In another embodiment, the ingredient chutes 120 may comprise a plurality of measuring containers (not shown) adapted to be removably placed in openings in the measuring platform 110. Such an embodiment may, for example, facilitate cleanup of the measuring and dispensing assembly 100. The ingredient chutes 120 may be of any suitable shape (cylindrical, tapered, rounded, etc.) for holding and dispensing ingredients. Other configurations for the ingredient chutes 120 may be suitably adapted by one of ordinary skill in the art with the benefit of these teachings without departing from the scope of the invention.

Some or all of the ingredient chutes 120 may have an opening 124. In one embodiment, openings 124 may be disposed near a bottom portion of some or all of the ingredient chutes 120. Openings 124 may, for example, simply comprise a lower end of an ingredient chute 120, or may comprise an orifice, a hole, perforations, and/or gratings formed in a portion of an ingredient chute 120. Openings 124 may be further adapted to be at least partially closed, for example by a covering or obstruction adapted to be positioned proximate the opening 124.

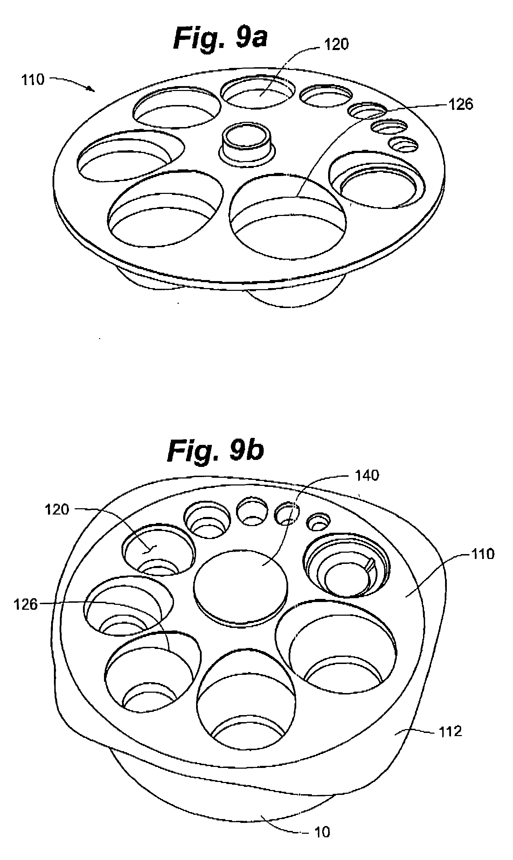

The ingredient chutes 120 may be adapted to hold a plurality of ingredients in measured amounts. For example, an ingredient chute 120 may have one or more fill lines 126 disposed on a portion thereof to allow measuring of different quantities of ingredients. FIG. 9 (a) is a top perspective view of a measuring platform 110 that shows an example of one possible arrangement of a plurality of ingredient chutes 120 arranged on the measuring platform 110. Fill lines 126 are indicated near an upper portion of the ingredient chutes 120 in FIG. 9 (a). FIG. 9 (b) shows the measuring platform 110 of FIG. 9 (a) operably coupled to a container 10 and disposed proximate an actuator knob 140. The fill lines 126 may correspond to various measurement units (English and or metric measurements, for example).

In use, a number of different ingredient chutes 120 may be filled with measured amounts of different ingredients to be released into a container for further processing. Of course, multiple ingredient chutes 120 may be used to measure a nd dispense the same ingredient. For example, to measure and/or dispense 3/8 cup of two different ingredients, one ingredient may be placed in an ingredient chute 120 that holds 3/8 cup, while the second ingredient may be placed in a ¼ cup ingredient chute 120 as well as in a 1/8 cup ingredient chute 120. In a further embodiment of the invention, multiple fill lines 126 may be positioned within a given ingredient chute 120 to allow greater flexibility of use. Other similar variations on usage may become apparent to one of ordinary skill in the art with the benefit of the teachings herein described.

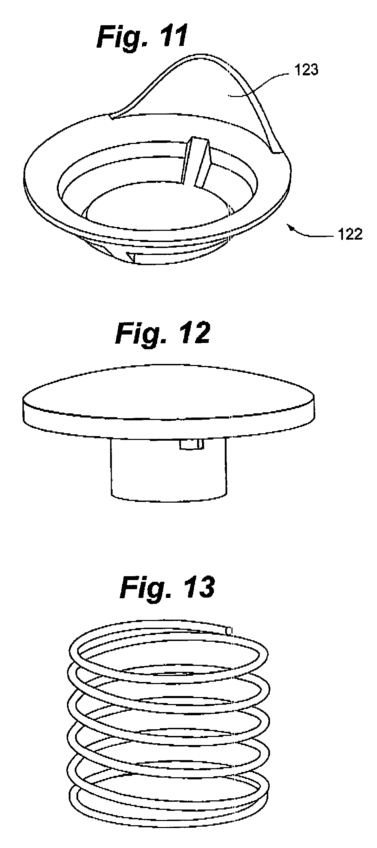

In one embodiment of the invention, an ingredient chute 120 may be adapted to hold an egg separator 122, for example to separate and dispense only the egg white portion. FIG. 11 shows one example of an egg separator 122 that may be used with certain embodiments of the invention. The egg separator 122 shown in FIG. 11 further includes an optional handle 123 adapted to facilitate placement and removal of the egg separator 122 into an ingredient chute 120 in the measuring platform 110. Alternately, an ingredient chute 120 may be adapted to function as an egg separator without the need for placement of a removable egg separator 122 within. For example, the structure of an egg separator could be formed as part of an ingredient chute 120 in the measuring platform 110. Such an arrangement may be useful, for example, in cooking applications where separation of egg whites from egg yolks occurs relatively frequently.

The dispensing mechanism for alternately blocking and releasing food ingredients from the ingredient chutes 120 may take a variety of forms. An example of a dispensing mechanism may comprise a plate structure (not shown), which could be placed underneath the measuring platform 110 to block passage of food ingredients from the ingredient chutes 120. Such a plate structure could be moved, for example, lowered and/or turned, to allow the openings 124 to be uncovered. A plate structure could have a plurality of holes, for example, which may be sized and arranged to align with the openings 124 in the ingredient chutes 120 when the plate structure is moved to release food ingredients from the ingredient chutes 120.

In the embodiment shown in FIGS. 7 and 8, the dispensing mechanism may comprise a dispensing member 160 adapted to alternately block and release passage of food ingredients from the ingredient chutes 120. In an embodiment of the invention, the dispensing member 160 may comprise an injection-molded part configured to block a plurality of openings 124 in the measuring platform 110. Dispensing member 160 may, for example, comprise a plurality of stoppers or plugs 166 disposed on the dispensing member 160 and arranged to block passage of food ingredients from ingredient chutes 120 when in a first position. The plugs 166 may be formed on a plate-like structure (not shown), or may be disposed at the ends of supporting arms as shown in FIGS. 7 and 8.

When the dispensing member 160 is moved from a first position to a second position, plugs 166 disposed on the dispensing member 160 may move away from openings 124 to allow food ingredients to be released from one or more ingredient chutes 120 into a container 10 disposed beneath. In one particular embodiment of the invention, plug 166 is formed in the shape of an inverted cone (pointy side up) to protrude upward and slightly into a bottom portion of an ingredient chute 120 to block the release of food ingredients. A variety of differently sized plugs 166 may be adapted for use with ingredient chutes 120 of different sizes. However, it should be noted that this example is given by way of illustration, not limitation. Alternate shapes and sizes may also work satisfactorily. For example, the plugs 166 may be dome-shaped, or may be tapered along the sides and flat on top, as in the case of some plugs and stoppers known in the art.

In an embodiment of the invention, the dispensing mechanism may be adapted to release a plurality of food ingredients into a container substantially simultaneously when the dispensing mechanism is actuated. However, as would be apparent to one of ordinary skill in the art, the timing of the release of ingredients into a container may be varied by placing only certain ingredients into ingredient chutes 120 for release at a given time, and repeating this process for ingredients to be added to the container at a later time, for example.

When the dispensing member 160 is positioned to block passage of food ingredients from ingredient chutes 120, premature "leakage" of food ingredients from the ingredient chutes 120 into the container 10 may be considered undesirable in certain food preparation scenarios. To improve the ability to block passage of certain food ingredients (liquid or fine granular items, for example), the physical contact between the openings 124 of the ingredient chutes 120 and the dispensing means may be enhanced to form a more complete seal at the interface. For example, measuring platform 110 may further comprise one or more seal surfaces 128 disposed proximate openings 124 to form a better mating surface with an obstruction placed in contact with the seal surface 128. The seal surface 128 may be formed of a rubber or plastic or composite material suitable for forming a seal, for example, which may mate or seal with a dispensing mechanism placed in contact with it. In an embodiment in which the dispensing mechanism comprises a dispensing member 160 with plugs 166 disposed thereon, the plugs 166 may be similarly formed of a rubber or plastic or composite material, or any suitable material for forming a sealing interface.

In an embodiment of the invention, an actuator for causing the dispensing member 160 to move from a first position to a second position may be operably coupled to the dispensing member 160. The actuator may include any variety of mechanical devices, such as knobs, buttons, levers, etc.. FIG. 12 shows an example of an actuator comprising knob 140. In one embodiment, knob 140 is operably coupled to dispensing member 160. In a further embodiment, the knob 140 and dispensing member 160 are adapted to be snap fit together, for example, by interlocking a protrusion in one device with a slot or notch in the other device. Knob 140 may, for example, be adapted to be pushed downward to actuate dispensing member 160 to cause food ingredients to be dispensed from the ingredient chutes 120. Alternately, the knob 140 may be adapted to be turned or twisted (in a clockwise direction, for example) to actuate dispensing member 160. Further, knob 140 may be adapted to be pushed or pulled, turned and twisted, or any other suitable combination that may cause dispensing member 160 to be moved from a first position to a second position to release food ingredients. Other actuating means may become apparent to those of ordinary skill in the art and would be deemed to be within the scope of the invention.

The actuator may optionally further comprise a biasing element to bias the dispensing member 160 toward the measuring platform 110. In one embodiment, the biasing element may comprise a spring 150 such as that shown in FIG. 13. Spring 150 may be used to bias the dispensing member 160 and measuring platform 110 toward being in contact with each other. The biasing force of spring 150 may, for example, improve the seal formed at the interface of seal surfaces 128 and plugs 166 in certain embodiments of the invention. Spring 150 may be adapted for use with the actuator. Further, spring 150 may be helical in configuration, and may be configured to operate under either compression or tension according to various embodiments of the invention. Biasing elements other than springs may be adapted for use with the actuator and may include pressurized gas (in a piston, for example), compressible materials (such as foam rubber, for example), and other resilient materials. In one particular embodiment, the spring 150 is placed in compression between measuring platform 110 and knob 140. Since knob 140 is operably coupled to dispensing member 160, the "upward" biasing force of spring 150 acting on knob 140 causes dispensing member 160 to be biased "upwardly" toward the measuring platform 110 to block the openings 124, according to this embodiment.

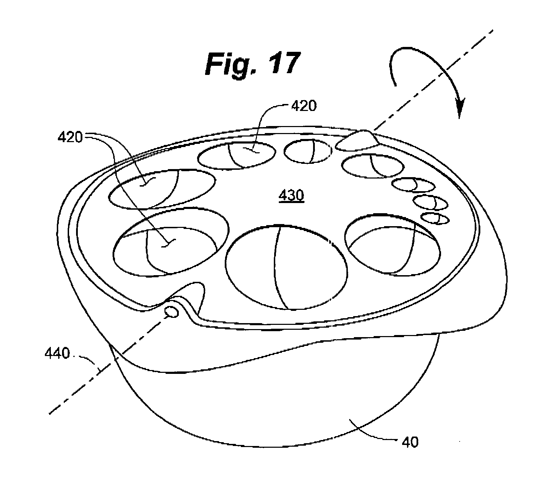

An alternate embodiment of the invention is shown in FIGS. 17 - 19. FIG. 17 shows a top perspective view of a measuring and dispensing assembly 430 operably coupled to a container 410 in accordance with an embodiment of the invention. Measuring and dispensing assembly 430 includes a plurality of ingredient chutes 420 disposed therein. Measuring and dispensing assembly 430 may be adapted to be supported proximate an opening in container 410, as shown in FIGS. 17 - 19. In one embodiment, the measuring and dispensing assembly 430 may be supported on top of container 410 such that items (such as food ingredients) placed into the ingredient chutes 420 would tend to move toward a bottom portion of the ingredient chutes 420 due to the force of gravity. In a preferred embodiment of the invention, the ingredient chutes 420 may have a closed bottom portion. The measuring and dispensing assembly 430 may be adapted to substantially cover the opening in container 410, as shown in the exemplary embodiment of FIGS. 17 - 19, however this is not required, and one of ordinary skill in the art with the benefit of these teachings may modify the relative sizes in accordance with design preference without departing from the scope of the invention.

In one embodiment of the invention, the measuring and dispensing assembly 430 may be formed of injection molded plastic having a plurality of ingredient chutes 420 formed therein, each ingredient chute 420 capable of holding a different amount of material, either dry or wet (one cup; ½ cup; ¼ cup...etc.) for measuring ingredients. In another embodiment, the ingredient chutes 420 may comprise a plurality of measuring containers (not shown) adapted to be removably placed in openings in the measuring and dispensing assembly 430. The ingredient chutes 420 may be of any suitable shape (cylindrical, tapered, rounded, etc.) for holding and dispensing ingredients. Other configurations for the ingredient chutes 420 may be suitably adapted by one of ordinary skill in the art with the benefit of these teachings without departing from the scope of the invention.

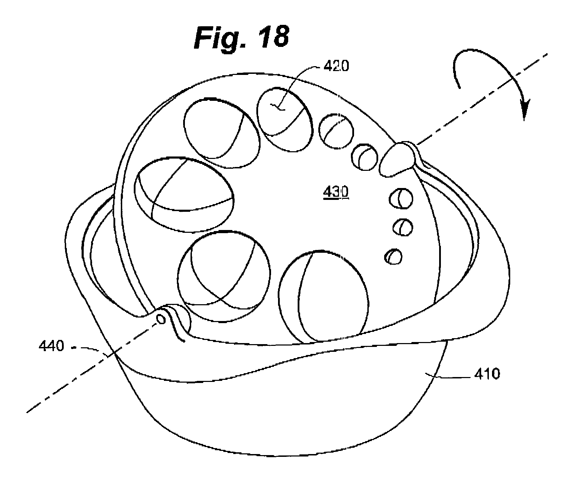

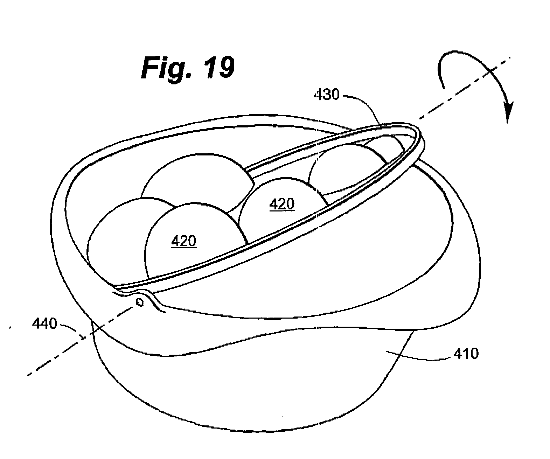

In one embodiment of the invention, the measuring and dispensing assembly 430 may be adapted to pivot about an axis 440. For example, the measuring and dispensing assembly 430 may be adapted to pivot about an axis 440 from a first position to a second position to dispense ingredients in ingredient chutes 420 into container 410. FIG. 18 is a top perspective view of a measuring and dispensing assembly 430 operably coupled to a container 410 being partially actuated in accordance with an embodiment of the invention. In certain embodiments of the invention, the measuring and dispensing assembly 430 is adapted to pivot about an axis 440 that is oriented substantially transverse to the opening in container 410, as shown in FIGS. 17 - 19. FIG. 19 is a top perspective view of a measuring and dispensing assembly 430 operably coupled to a container 410 in accordance with an embodiment of the invention. In FIG. 19, the measuring and dispensing assembly 430 has been pivoted further about axis 440 than as shown in FIG. 18 such that ingredients contained in ingredient chutes 420 will have been substantially dispensed into container 410.

In a further embodiment of the invention, the ingredient chutes 420 may comprise removable measuring containers arranged on a measuring platform 430, as described above, one or more of which may be adapted to pivot about an axis (not shown) oriented substantially transverse to an opening in the measuring platform 430, such that the ingredients within any given ingredient chute may be dispensed through an opening in the measuring platform 430 independently of the other ingredient chutes 420 by pivoting the individual ingredient chute about the axis. Such an embodiment may, for example, allow a higher degree of flexibility in timing the dispensation of a variety of ingredients.

Thus, embodiments of the MEASURING AND DISPENSING APPARATUS WITH MIXING CONTAINER are disclosed. One skilled in the art will appreciate that the invention can be practiced with embodiments other than those disclosed. The disclosed embodiments are presented for purposes of illustration and not limitation, and the invention is limited only by the claims that follow.

## Claims

1. A measuring and dispensing apparatus for measuring and dispensing ingredients into a container comprising:
a measuring platform adapted to be coupled to a container, the measuring platform comprising an ingredient chute adapted to allow passage of a measured quantity of an ingredient through an opening in the ingredient chute;
a dispenser operably coupled to the measuring platform to cover and uncover the opening in the ingredient chute of the measuring platform; and
an actuator coupled to the dispenser to move the dispenser relative to the measuring platform to uncover the opening and thereby release the ingredient contained in the ingredient chute into the container.

2. The measuring and dispensing apparatus of claim 1 wherein an ingredient chute is removable.

3. The measuring and dispensing apparatus of claim 1 wherein an ingredient chute has graduation markings.

4. The measuring and dispensing apparatus of claim 1 wherein an ingredient chute is sized to accept a known amount of an ingredient.

5. The measuring and dispensing apparatus of claim 4 wherein an ingredient chute has a fill line.

6. The measuring and dispensing apparatus of claim 1 wherein the opening in the ingredient chute is disposed near a bottom portion of the ingredient chute.

7. The measuring and dispensing apparatus of claim 1 comprising at least two ingredient chutes adapted to hold different amounts of ingredients.

8. The measuring and dispensing apparatus of claim 1 wherein the ingredient chute is adapted to function as an egg separator.

9. The measuring and dispensing apparatus of claim 1 wherein a removable egg separator is adapted to be coupled to the ingredient chute.

10. The measuring and dispensing apparatus of claim 7 wherein the dispenser comprises a plug adapted to control the release of ingredients from an ingredient chute.

11. The measuring and dispensing apparatus of claim 10 wherein the actuator comprises a knob operably coupled to the dispenser.

12. The measuring and dispensing apparatus of claim 11 wherein the knob is adapted to be pressed.

13. The measuring and dispensing apparatus of claim 11 wherein the knob is adapted to be rotated.

14. The measuring and dispensing apparatus of claim 11 wherein the actuator further comprises a spring adapted to bias the dispenser toward the measuring platform.

15. The measuring and dispensing apparatus of claim 14 wherein the knob is releasably attached to the dispenser and wherein the spring is in compression between the measuring platform and the knob to bias the dispenser toward the measuring platform.

16. The measuring and dispensing apparatus of claim 10 wherein the dispenser is adapted to release ingredients from the ingredient chutes substantially simultaneously.

17. The measuring and dispensing apparatus of claim 10 wherein the plug is at least partially conical in shape.

18. The measuring and dispensing apparatus of claim 10 wherein the plug is at least partially spherical in shape.

19. The measuring and dispensing apparatus of claim 10 wherein the plug protrudes upwardly into the openings of the ingredient chutes to provide a seal with the openings of the ingredient chutes.

20. The measuring and dispensing apparatus of claim 10 wherein the plugs are made of a resilient material.

21. The measuring and dispensing apparatus of claim 7 wherein the dispenser comprises a plate member with a plurality of apertures adapted to control the release of ingredients from the ingredient chutes.

22. The measuring and dispensing apparatus of claim 21 wherein the dispenser is adapted to release ingredients from the ingredient chutes substantially simultaneously.

23. The measuring and dispensing apparatus of claim 1 wherein the container is a mixing bowl.

24. The measuring and dispensing apparatus of claim 23 wherein the mixing bowl further comprises a hand grip portion to provide added stability.

25. A measuring and dispensing apparatus for measuring and dispensing ingredients into a container comprising:
a measuring platform adapted to be operably coupled to a container, the measuring platform comprising an ingredient chute adapted to hold a measured quantity of an ingredient, the measuring platform being further adapted to pivot about an axis oriented substantially transverse to an opening in the container to thereby release the measured quantity of an ingredient into the container.

26. A measuring and dispensing apparatus for measuring and dispensing ingredients into a container comprising:
a measuring platform adapted to be operably coupled to a container, the measuring platform comprising an ingredient chute adapted to hold a measured quantity of an ingredient, the ingredient chute being further adapted to pivot about an axis oriented substantially transverse to an opening in the container to thereby release the measured quantity of an ingredient into the container.

27. The measuring and dispensing apparatus of claim 26 wherein the measuring platform further comprises a plurality of ingredient chutes, each ingredient chute adapted to be independently pivoted about an axis oriented substantially transverse to an opening in the container.

28. A cover assembly comprising:
a body adapted to be releasably coupled to a container and to substantially cover the container;
an aperture formed in the body adapted to allow movable passage of at least a portion of a mixing device; and
a seal adapted to flexibly couple the body to the mixing device to serve as a splashguard.

29. A food preparation system comprising:
a mixing container adapted to be releasably coupled to a plurality of cover devices;
a measuring and dispensing assembly comprising
a measuring platform adapted to be releasably coupled to the mixing container, the measuring platform comprising at least two ingredient chutes, each ingredient chute adapted to allow passage of a measured quantity of an ingredient through an opening in the ingredient chute,
a dispenser operably coupled to the measuring platform to cover and uncover the openings in the at least two ingredient chutes of the measuring platform, and
an actuator for moving the dispenser relative to the measuring platform to thereby release the ingredients contained in the at least two ingredient chutes into the mixing container; and
a splashguard cover comprising
a body adapted to be releasably coupled to the mixing container and to substantially cover the mixing container,
an aperture formed in the body adapted to allow movable passage of at least a portion of a mixing device, and
a seal adapted to flexibly couple the body to the mixing device to serve as a splashguard.
